# EUROPEAN PATENT APPLICATION

(11) **EP 4 481 907 A1**
(43) Date of publication of application: **25.12.2024**
(21) Application number: 22927285.1
(22) Date of filing: 04.11.2022
(51) Int. Cl.: H01M 50/129, H01M 10/0562, H01M 10/0585, H01M 50/105, H01M 50/121, H01M 50/133

(54) **OUTER PACKAGE MATERIAL FOR ALL-SOLID-STATE SECONDARY BATTERIES, AND ALL-SOLID-STATE SECONDARY BATTERY**

(30) Priority: 16.02.2022 JP 2022022017
(71) Applicant: Kureha Corporation, Chuo-ku Tokyo 103-8552 (JP)
(72) Inventor: TAJIMA, Saori, Tokyo 103-8552 (JP); KUDO, Takahiro, Tokyo 103-8552 (JP); MURAYAMA, Toshimi, Tokyo 103-8552 (JP); KOBAYASHI, Fuminori, Tokyo 103-8552 (JP)
(74) Representative: Hoefer & Partner Patentanwälte mbB
(86) International application number: PCT/JP2022/041117
(87) International publication number: WO 2023/157391

(57) **Abstract**

Provided is an outer package material for all-solid-state secondary batteries using a resin having a melting point not as high as that of PET or PPS, the outer package material having high heat-seal strength at about 130°C after heat sealing. The outer package material for all-solid-state secondary batteries for solving the above issues includes: a substrate layer; a barrier layer including, as a material, a metal or a compound containing a metal; and a heat seal layer containing polyvinylidene fluoride that are stacked in this order, the heat seal layer having a thickness of 10 µm or more and 500 µm or less.

## Description

### TECHNICAL FIELD

The present invention relates to an outer package material for all-solid-state secondary batteries, and an all-solid-state secondary battery.

### BACKGROUND ART

In recent years, there has been a growing concern on environmental issues, and electric vehicles such as xEVs, which are expected to reduce environmental burden, are becoming widespread. Nonaqueous electrolyte lithium secondary batteries are widely used as power sources for them as high energy density secondary batteries. However, since a secondary battery mounted in an xEV is large, heat generation from the battery is large, and the development of a secondary battery that operates safely at a high temperature is expected.

An all-solid-state secondary battery has attracted attention as an innovative secondary battery that operates safely even at a high temperature. An all-solid-state secondary battery is a highly safe battery in which a flammable organic electrolytic solution included in the lithium secondary battery is replaced with a non-flammable inorganic solid electrolyte. The all-solid-state secondary battery has a structure in which a battery element including a positive electrode, a negative electrode, and a solid electrolyte disposed between the positive electrode and the negative electrode is accommodated in a package body formed of an outer package material.

As the outer package material of the all-solid-state secondary battery, a laminate including a substrate layer, a barrier layer for preventing entry of moisture, and a heat-sealable resin layer is used (for example, Patent Document 1). By covering the battery element so as to be sandwiched from above and below by two outer package materials, and heat-sealing the upper and lower outer package materials (heat-sealable resin layers) at a flange portion protruding from a peripheral edge portion of the battery element, it is possible to form an all-solid-state secondary battery in which the battery element is accommodated in the package body formed of the outer package material.

An all-solid-state secondary battery does not use an electrolytic solution and thus has an advantage that the all-solid-state secondary battery can be used even at a temperature higher than a boiling point (about 80°C) of an electrolytic solution solvent, which is not provided in known secondary batteries. Since ionic conductivity of the solid electrolyte increases as the temperature increases, input/output characteristics and the like can be improved by using an all-solid-state secondary battery at a high temperature.

In order to adapt the battery to use at such a high temperature, high heat resistance is also required for a member for accommodating a battery element such as an outer package material.

For example, Patent Document 2 describes that for a terminal resin film that accommodates a terminal for extracting a current from an electrode, the heat resistance of the terminal resin film can be enhanced by using a thermoplastic resin having a high melting point, such as nylon, polyethylene terephthalate (PET), a polyester copolymer, and polyphenylene sulfide (PPS), or a thermosetting resin.

Also, it is known that water vapor and the like enter the inside of the battery from a heat seal portion and the like between heat seal resins. When water vapor enters the inside of the battery, the water vapor having entered may cause performance deterioration of the battery element, or when a sulfide is used for the solid electrolyte, the water vapor having entered may react with the sulfide to generate hydrogen sulfide; therefore, it is necessary to suppress the entry of the water vapor into the inside of the battery. Thus, the heat seal resin used for the outer package material is required to have a high gas barrier property.

### Citation List

### Patent Document

Patent Document 1: WO 2020/184692
Patent Document 2: WO 2020/004412
Patent Document 3: WO 2020/153458

### SUMMARY OF INVENTION

### TECHNICAL PROBLEM

In order to use all-solid-state secondary batteries at a high temperature, it is necessary to enhance the heat resistance of, not only the terminal resin film as described in Patent Document 2 but also the outer package material. On the other hand, when a thermoplastic resin having a high melting point (for example, the melting point of PET is 260°C, and the melting point of PPS is 280°C) as described in Patent Document 2 is to be used as a heat seal resin of the outer package material as described in Patent Document 1, it is necessary to set the temperature at the time of heat sealing to a high temperature, and a substrate layer resin is required to have higher heat resistance than the heat seal resin, so that there is a large limitation in practical use.

As described in Patent Document 3, the heat seal resin used for the outer package material is required to have a low water vapor transmission. However, according to findings by the present inventors, PET has a high water vapor transmission rate (water vapor transmission: 40°C, 90% RH, 1034 g/m²·day·atm, in which both the water vapor transmission rate and an oxygen transmission rate described in the present specification are values when the thickness is 20 µm), and water vapor may enter the inside of the battery from an end portion of a heat seal portion when the all-solid-state secondary battery is used. Although PPS has a lower water vapor transmission rate than PET (water vapor transmission: 40°C, 90% RH, 228 to 684 g/m²·day·atm), the water vapor transmission rate is still insufficient, and when PPS is melted and cooled/cured, PPS may become brittle.

When oxygen enters the inside of the battery, alkali metal or alkali metal ions as an active material are oxidized, and deactivation of the active material is inhibited, so that the heat seal resin used for the outer package material is also required to have low oxygen transmission. However, according to findings by the present inventors, PPS, polytetrafluoroethylene (PTFE), an ethylene-polytetrafluoroethylene copolymer (ETFE), and the like have high oxygen transmission and cannot suppress the entry of oxygen into the battery.

In view of the above circumstances, an object of the present invention is to provide an outer package material for all-solid-state secondary batteries using a heat seal resin, and an all-solid-state secondary battery including the outer package material, the outer package material having high adhesive strength even when a temperature of a heat seal portion between heat seal resins is high, in which the heat seal resin has a high gas barrier property (both water vapor transmission and oxygen transmission are low).

### SOLUTION TO PROBLEM

One aspect of the present invention for solving the above issues relates to the following [1] to [4] outer package materials for all-solid-state secondary batteries.
[1] An outer package material for all-solid-state secondary batteries, including: a substrate layer;
   a barrier layer including, as a material, a metal or a compound containing a metal; and
   a heat seal layer containing polyvinylidene fluoride, the heat seal layer having a thickness of 10 µm or more and 500 µm or less,
   wherein the substrate layer, the barrier layer, and the heat seal layer are stacked in this order.
[2] The outer package material for all-solid-state secondary batteries according to [1], wherein the polyvinylidene fluoride has a melting point of 145°C or higher and 190°C or lower.
[3] The outer package material for all-solid-state secondary batteries according to [1] or [2], wherein, after the heat seal layers of two of the outer package materials for all-solid-state secondary batteries are heat-sealed to each other, a T-shaped peeling strength between the two heat seal layers at 130°C is 18 N/cm or more.
[4] The outer package material for all-solid-state secondary batteries according to any of [1] to [3], wherein the barrier layer and the heat seal layer are bonded by a silane coupling agent having an amino group.

Another aspect of the present invention for solving the above issues relates to the following all-solid-state secondary battery in [5].
An all-solid-state secondary battery, including a battery element and the outer package material for all-solid-state secondary batteries according to any of [1] to [4] that accommodates the battery element, the battery element including a positive electrode, a negative electrode, and a solid electrolyte layer disposed between the positive electrode and the negative electrode.

### ADVANTAGEOUS EFFECTS OF INVENTION

The present invention provides an outer package material for all-solid-state secondary batteries using a heat seal resin, and an all-solid-state secondary battery including the outer package material, the outer package material having high adhesive strength even when a temperature of a heat seal portion between heat seal resins is high, in which the heat seal resin has a high gas barrier property (both water vapor transmission and oxygen transmission are low).

### DESCRIPTION OF EMBODIMENTS

### [Outer package material]

One embodiment of the present invention relates to an outer package material for all-solid-state secondary batteries including a substrate layer, a barrier layer that is a metal foil, and a heat seal layer that has a thickness of 10 µm or more and 500 µm or less and contains polyvinylidene fluoride. Hereinafter, the all-solid-state secondary battery is also simply referred to as a "battery".

### (Substrate layer)

The substrate layer is a layer that imparts strength of the outer package material and heat resistance (shape maintainability) at the time of heat sealing to the outer package material, and imparts scratch resistance (particularly, protection of the barrier layer), chemical resistance, insulation, fixation of a relative position between members of a battery element, good adhesion between an electrode and a solid electrolyte layer, and the like to the battery. The substrate layer is preferably a resin layer. In the present specification, the term "resin layer" means a layer in which most of a material included in the layer is resin, and for example, it means a layer in which 50 mass% or more and 100 mass% or less, and preferably 70 mass% or more and 100 mass% or less with respect to a total mass of the layer is resin. The substrate layer may be a single layer or may be a multilayer body including a plurality of layers having different resin types and the like.

The material of the substrate layer is not particularly limited, and a polyester resin, a polyamide resin, a polyolefin resin, an acrylic resin, a fluororesin, a polyurethane resin, a polyphenylene sulfide resin, a polyether ether ketone resin, an epoxy resin, a phenol resin, and the like can be used. Among them, polyester resins such as polyethylene terephthalate, polybutylene terephthalate, and polyethylene naphthalate are preferable from the viewpoint of enhancing moldability of the outer package material, and polyamide resins such as nylon 6, nylon 66, nylon 9T, nylon 10, nylon 11, and nylon 12 are preferable from the viewpoint of enhancing stretchability of the outer package material.

In addition to these resins, additives such as a lubricant, a flame retardant, an antiblocking agent, an antioxidant, a light stabilizer, a tackifier, and an antistatic agent may be added to the substrate layer.

The thickness of the substrate layer is not particularly limited as long as it can exhibit a function as a substrate, and is preferably 1 µm or more and 50 µm or less, more preferably 5 µm or more and 40 µm or less, still more preferably 10 µm or more and 40 µm or less, and particularly preferably 20 µm or more and 35 µm or less. As the thickness of the substrate layer is thicker, the action of the substrate layer described above can be more sufficiently exhibited. Meanwhile, from the viewpoint of reducing the thickness of the outer package material to further increase a relative capacity of the battery element that can be accommodated in the battery, the thickness of the substrate layer is preferably not too thick. From the viewpoint of balancing these, the thickness of the substrate layer is preferably adjusted within the above range.

### (Barrier layer)

The barrier layer is a layer for preventing water from entering the inside of the battery. A plurality of barrier layers may be provided.

The material of the barrier layer is not particularly limited as long as the material has sufficiently low moisture permeability and higher heat resistance than a heat seal layer resin, and a metal and a compound containing a metal such as a metal oxide or a metal sulfide are preferable. Specifically, plates, foils, and vapor-deposited films including pure metals such as aluminum, steel, nickel, titanium, and copper, alloys such as aluminum alloys, stainless steel, and titanium alloys, and metal compounds such as metal oxides and metal sulfides are preferable. Among them, a foil and a vapor-deposited film including pure metal or alloy are more preferable, and an aluminum foil, an aluminum alloy foil, and a stainless-steel foil are still more preferable.

The barrier layer may have a coating formed by a hot water modification treatment, a chemical conversion treatment, an anodization treatment, a sterilization treatment, a coating treatment, or the like on the surface thereof. The coating described above can be, for example, a corrosion-resistant film formed on the heat seal layer side (battery element side when a battery is formed).

The thickness of the barrier layer is preferably 1 µm or more and 200 µm or less, more preferably 1 µm or more and 100 µm or less, still more preferably 5 µm or more and 80 µm or less, and still even more preferably 10 µm or more and 70 µm or less. As the thickness of the barrier layer is thicker, the action of the barrier layer described above can be more sufficiently exhibited. On the other hand, it is preferable that the thickness of the barrier layer is not too thick from the viewpoint of reducing the thickness of the outer package material to further increase the relative capacity of the battery element that can be accommodated in the battery and improving workability of the outer package material. From the viewpoint of balancing these, the thickness of the barrier layer is preferably adjusted within the above range.

### (Heat seal layer)

The heat seal layer is a layer for forming a sealed package body accommodating the battery element therein by heat sealing with the heat seal layer of the outer package material paired at a peripheral edge portion of the battery element. In the present embodiment, the heat seal layer is a layer made of a resin containing polyvinylidene fluoride.

According to the findings by the present inventors, polyvinylidene fluoride has a relatively high melting point, and therefore is hardly softened and melted even when the temperature is increased. Thus, the heat seal layer containing polyvinylidene fluoride can improve the heat resistance of the outer package material to improve input/output characteristics when the battery is operated at a high temperature.

Polyvinylidene fluoride can increase heat-seal strength after the heat seal layers are heat-sealed to each other. In particular, polyvinylidene fluoride can sufficiently increase the heat-seal strength at a high temperature of about 130°C as compared with other resins having a high melting point. Thus, polyvinylidene fluoride can suppress deterioration of sealability of the battery due to peeling of the heat seal layer when the battery is used at a relatively high temperature.

In addition, polyvinylidene fluoride has a feature that both the oxygen transmission and water vapor transmission are low. Thus, polyvinylidene fluoride can inhibit movement of oxygen and water vapor through the heat seal layer, and can suppress deterioration of the battery element, generation of hydrogen sulfide, and the like due to entrance of oxygen and water vapor into the battery. On the other hand, for example, polytetrafluoroethylene (PTFE) and an ethylene-polytetrafluoroethylene copolymer (ETFE) have issues that although the water vapor transmission is low, the oxygen transmission is high, PET has high water vapor transmission, and PPS has high oxygen transmission and high water vapor transmission. Polyvinylidene fluoride is suitable as a thermoplastic resin having a relatively high melting point and a resin capable of being used for the heat seal layer of the outer package material while satisfying both of them. Since the heat seal layer is in direct contact with the positive electrode and the negative electrode, the heat seal layer is exposed to oxidation/reduction potentials from these electrodes. On the other hand, polyvinylidene fluoride is hardly oxidized or reduced, so that stability of the heat seal layer can be enhanced. Polyvinylidene fluoride can enhance durability of a battery using an outer package material containing polyvinylidene fluoride due to the above effect.

Polyvinylidene fluoride may be a homopolymer containing only a structural unit derived from vinylidene fluoride, or may be a copolymer containing a structural unit derived from vinylidene fluoride and a structural unit derived from a monomer other than vinylidene fluoride. When polyvinylidene fluoride is a copolymer, the polyvinylidene fluoride may be a random copolymer or a block copolymer.

Examples of the monomer other than vinylidene fluoride include a fluorine-containing alkylvinyl compound, an unsaturated dibasic acid or unsaturated dibasic acid monoester, and a compound containing a vinyl group and a polar group (hereinafter, also referred to as "polar group-containing compound").

The fluorine-containing alkylvinyl compound is a compound having one or more vinyl groups and an alkyl group, and is a compound in which one or more hydrogen atoms of the alkyl group are substituted with fluorine or fluorine is bonded to the vinyl group. However, the fluorine-containing alkylvinyl compound does not contain vinylidene fluoride.

Specific examples of the fluorine-containing alkylvinyl compound include vinyl fluoride, trifluoroethylene, tetrafluoroethylene, chlorotrifluoroethylene, hexafluoropropylene, hexafluoroethylene, fluoroalkyl vinyl ether, and perfluoromethyl vinyl ether, which are compounds having one vinyl group, and perfluorodivinyl ether and perfluoroalkylene divinyl ether, which are crosslinkable compounds having a plurality of vinyl groups.

The unsaturated dibasic acid is an unsaturated dicarboxylic acid or a derivative thereof. Examples of the unsaturated dibasic acid include a compound in which two carboxyl groups are bonded with a linear or branched unsaturated alkylene group having 1 or more and 6 or less carbon atoms, and specific examples thereof include maleic acid, fumaric acid, itaconic acid, and citraconic acid.

The unsaturated dibasic acid monoester is a monoester compound derived from the unsaturated dibasic acid, and specific examples thereof include maleic acid monomethyl ester, maleic acid monoethyl ester, citraconic acid monomethyl ester, and citraconic acid monoethyl ester.

Examples of the polar group-containing compound include (meth)acrylic acid, 2-carboxyethyl (meth)acrylate, (meth)acryloyloxyethyl succinic acid, (meth)acryloyloxypropyl succinic acid, and glycidyl (meth)acrylate.

The melting point of polyvinylidene fluoride varies depending on whether the polyvinylidene fluoride is a homopolymer or a copolymer, and when the polyvinylidene fluoride is a copolymer, the melting point varies depending on the type (structure), amount, and the like of a structural unit derived from the monomer other than vinylidene fluoride. From the viewpoint of further enhancing the heat resistance of the outer package material and bondability at a relatively high temperature of about 130°C, the melting point of polyvinylidene fluoride is preferably 145°C or higher and 190°C or lower, more preferably 155°C or higher and 190°C or lower, still more preferably 165°C or higher and 180°C or lower, and particularly preferably 170°C or higher and 180°C or lower.

The melting point of the vinylidene fluoride-based polymer is a value measured by calorimetry with a differential scanning calorimeter (DSC). Specifically, 10 mg of the vinylidene fluoride-based polymer is weighed in an aluminum pan, and placed in the DSC, and the inside of the DSC is replaced with pure nitrogen gas. Thereafter, the pure nitrogen gas is caused to flow at a flow rate of 100 ml/min, the temperature is raised from room temperature to 230°C at 10°C/min (first temperature rise), held at 230°C for 10 minutes, then lowered from 230°C to 30°C at 10°C/min (first cooling), and further raised from 30°C to 230°C at 10°C/min (second temperature rise), and a melting peak is specified by the DSC. Then, a maximum melting peak temperature observed at the second temperature rise is defined as the melting point of the vinylidene fluoride-based polymer.

From the viewpoint of further enhancing the heat resistance of the outer package material, from the viewpoint of more sufficiently enhancing the bondability at a relatively high temperature of about 130°C, from the viewpoint of further reducing the oxygen transmission and the water vapor transmission of the outer package material, and from the viewpoint of more sufficiently exhibiting the above-described effects peculiar to polyvinylidene fluoride, polyvinylidene fluoride is preferably a homopolymer of vinylidene fluoride. Also when the polyvinylidene fluoride is a copolymer, the ratio of vinylidene fluoride is preferably higher, and for example, a proportion of the structural unit derived from vinylidene fluoride to a total mass of the structural units contained in the polyvinylidene fluoride copolymer is preferably 80 mass% or more and less than 100 mass%, more preferably 90 mass% or more and less than 100 mass%, still more preferably 95 mass% or more and less than 100 mass%, and particularly preferably 98 mass% or more and less than 100 mass%.

From the viewpoint of sufficiently exhibiting the above-described effect by polyvinylidene fluoride, the content of polyvinylidene fluoride contained in a total mass of the heat seal layer is preferably 70 mass% or more and 100 mass% or less, and more preferably 95 mass% or more and 100 mass% or less.

The heat seal layer may contain a resin other than polyvinylidene fluoride, an elastomer for imparting impact resistance, a lubricant, an antioxidant, a slipping agent, a flame retardant, an anti-blocking agent, a light stabilizer, a dehydrating agent, a tackifier, a crystal nucleating agent, and the like. However, from the viewpoint of sufficiently exhibiting the above characteristics by polyvinylidene fluoride, a total amount of the components other than polyvinylidene fluoride contained in the total mass of the heat seal layer is preferably 0 mass% or more and 30 mass% or less, and more preferably 0 mass% or more and 5 mass% or less.

The thickness of the heat seal layer is 10 µm or more and 500 µm or less. When the thickness of the heat seal layer is 10 µm or more, the heat resistance of the outer package material can be further enhanced, and bonding strength at a relatively high temperature of about 130°C can be more sufficiently enhanced. The upper limit of the thickness of the heat seal layer is not particularly limited, and is set to 500 µm or less from the viewpoint of more easily performing heat sealing. From the above viewpoint, the thickness of the heat seal layer is preferably 20 µm or more and 300 µm or less, more preferably 30 µm or more and 250 µm or less, and still more preferably 80 µm or more and 230 µm or less.

### (Configuration and the like of outer package material)

In the outer package material, the substrate layer, the barrier layer, and the heat seal layer described above are stacked in this order. When a package body accommodating a battery is formed, the outer package material is disposed such that the substrate layer is on an opposite side (outer side) to the battery element and the heat seal layer is on the battery element side (inner side).

The outer package material may have layers other than the layers described above. For example, when the outer package material is formed into a package body, the outer package material may have a protective layer of the outer package agent disposed on the further outer side of the substrate layer.

The outer package material may have an adhesive for bonding each layer included in the outer package material.

The adhesive may be an adhesive made of a resin such as a polyolefin-based adhesive, a polyurethane-based adhesive, or an epoxy-based adhesive, or may be a coupling agent such as a silane coupling agent or a titanium coupling agent. Among them, from the viewpoint of further increasing the bonding strength at a relatively high temperature of about 130°C, the coupling agent is preferable, the silane coupling agent is more preferable, and a silane coupling agent having an amino group is still more preferable. In the silane coupling agent having an amino group, the amino group and PVDF are chemically bonded, so that the barrier layer and the PVDF heat seal layer can be strongly bonded. Since curing or decomposition of an adhesive layer by heating at 130°C and an excessive reaction with PVDF do not occur, it is considered that the bonding strength is increased in the high temperature range.

When the outer package material is formed into a package body accommodating a battery, the battery element is covered with two upper and lower outer package materials such that the substrate layer is on the opposite side (outer side) to the battery element and the heat seal layer is on the battery element side (inner side). At that time, the outer package material is caused to protrude outward from a peripheral edge portion of the battery element, and the heat seal layers of the two upper and lower outer package materials in the protruding portion are heated and pressurized to be heat-sealed to each other. As a result, it is possible to form a package body in a sealed state in which the battery element is accommodated. The temperature at which the heat sealing is performed may be set in a range of equal to or higher than the melting point of polyvinylidene fluoride contained in the heat seal layer and equal to or lower than the melting point + 10°C.

In the outer package material, by using the heat seal layer containing polyvinylidene fluoride, the heat-seal strength between the heat seal layers through heat sealing is high even at a high temperature. Specifically, two outer package materials cut into a strip shape having a length of 100 mm × a width of 15 mm are stacked so that the heat seal layers face each other, heated at a temperature equal to or higher than the melting point of polyvinylidene fluoride contained in the heat seal layer and equal to or lower than the melting point + 10°C for 3 seconds while being pressurized to 0.5 MPa, then allowed to stand at room temperature, left for 24 hours or longer, and slowly cooled to room temperature to heat-seal the heat seal layers to each other. At this time, the two overlapped outer package materials are not heat-sealed for 25 mm from one end in a longitudinal direction, and the remaining region of 75 mm is heat-sealed. Thereafter, a heat-sealed body cut out to a width of 10 mm is used as a T-shaped test piece, a non-heat-sealed end of the T-shaped test piece is opened in the opposite direction until the non-heat-sealed end becomes perpendicular to the heat-sealed portion and the non-heat-sealed portion becomes linear, and under the condition of 130°C, the non-heat-sealed ends are moved to the linear direction to each other at a speed of 50 mm/min and moved in the opposite direction to peel off the heat-sealed portion. At this time, T-shape peeling strength (N/cm) obtained by dividing maximum stress (N) at a peeling distance of 5 mm to 50 mm by the width (cm) of the heat-sealed body is preferably 18 N/cm or more, more preferably 25 N/cm or more, and still more preferably 38 N/cm or more.

### [All-solid-state secondary battery]

The above-described outer package material can be used as the outer package material of the all-solid-state secondary battery. The all-solid-state secondary battery including the outer package material includes a positive electrode, a negative electrode, a solid electrolyte layer disposed between the electrodes, and an outer package material that has a battery element including a terminal for extracting a current from each electrode and accommodates the battery element except for a part of the current extraction terminal. At this time, in the outer package material, the heat seal layers are heat-sealed to each other at a peripheral portion of the battery element to form a sealed package body accommodating the battery element in the outer package material. Here, the current extraction terminal is partially heat-sealed together with the outer package material, and is exposed to the outside of the sealed package body.

The type, material, shape, size, and the like of the battery element are not particularly limited.

For example, the positive electrode can be any positive electrode active material layer for an all-solid-state secondary battery, in which a positive electrode active material layer is formed on a current collector, a positive electrode active material is contained, and a solid electrolyte, a conductive auxiliary agent, a binder, and the like are optionally contained.

Examples of the material included in the positive electrode current collector include stainless steel (SUS), aluminum, nickel, iron, titanium, and alloys thereof.

The thickness of the positive electrode current collector is appropriately set according to the size and the like of the all-solid-state battery, and is preferably about 10 to 1000 µm.

Examples of the positive electrode active material include layered rock-salt type oxides such as LiCoO₂, LiNiO₂, Li(Ni_{0.8}Co_{0.15}Al_{0.05})O₂, Li(Ni_{1/3}Mn_{1/3}Co_{1/3})O₂ and Li(Ni_{1/2}Mn_{1/2})O₂, spinel type positive electrode active materials such as LiMn₂O₄ and Li(Ni_{1/2}Mn_{3/2})O₄, and olipin structure type positive electrode active materials such as LiFePO₄, LiMnPO₄, LiCoPO₄, and LiNiPO₄. In addition, sulfides such as TiS₂, MoS₂, FeS, FeS₂, CuS, and Ni₃S₂), NbSe₃, and the like may be used.

The positive electrode active material layer preferably further contains a solid electrolyte. This allows the ion conductivity in the positive electrode active material layer to improve. The solid electrolyte contained in the positive electrode active material layer is the same as the solid electrolyte exemplified in the solid electrolyte to be described below.

Examples of the conductive auxiliary agent include metal, graphite such as natural graphite and artificial graphite, carbon fiber, vapor grown carbon fiber (VGCF), carbon black such as acetylene black and ketjen black, and nanocarbon such as needle coke and nanotube (CNT).

Examples of the binder include resin-based polymers such as polyethylene, polypropylene, polyethylene terephthalate, polymethyl methacrylate, polyimide, aromatic polyamide, and cellulose; thermoplastic elastomers such as styrene-butadiene-styrene block copolymer (SBS), ethylene-propylene-diene terpolymer (EPDM), styrene-ethylene-butadiene-ethylene copolymer (SEBS), and styrene-isoprene-styrene block copolymer (SIS); and fluorine-based polymers such as polyvinylidene fluoride (PVDF), polytetrafluoroethylene (PTFE), and ethylene-polytetrafluoroethylene copolymer (ETFE).

The negative electrode can be any negative electrode active material layer for an all-solid-state secondary battery, in which a negative electrode active material layer is formed on the current collector and contains a negative electrode active material, and a solid electrolyte, a conductive auxiliary agent, a binder, and the like are optionally contained.

Examples of the material included in a negative electrode current collector include stainless steel (SUS), copper, and nickel.

The thickness of the negative electrode current collector is appropriately set according to the size and the like of the all-solid-state battery, and is preferably about 10 to 1000 µm.

Examples of the negative electrode active material include metal lithium, metals such as Sn, Si, Al, Ge, Sb, P, and In, metal oxides such as Nb₂O₅ and Li₄Ti₅O₁₂, complexes of metals and metal oxides such as SiO, graphitic materials such as artificial graphite and natural graphite, and amorphous carbons such as graphitizable carbon and non-graphitizable carbon.

The negative electrode active material layer preferably further contains a solid electrolyte. This can improve the ion conductivity in the negative electrode active material layer. The solid electrolyte contained in the negative electrode active material layer is the same as the solid electrolyte exemplified in the solid electrolyte to be described below.

Examples of the conductive auxiliary agent and the binder that can be contained in the negative electrode active material layer include substances similar to the conductive auxiliary agent and the binder that can be contained in the positive electrode active material layer.

Examples of the solid electrolyte include sulfide-based solid electrolyte such as Li₂S-P₂S₅, Li₂S-SiS₂, LiX-Li₂S-SiS₂, LiX-Li₂S-P₂S₅, LiX-Li₂O-Li₂S-P₂S₅, LiX-Li₂S-P₂O₅, LiX-Li₃PO₄-P₂S₅, and Li₃PS₄ (in the above examples, for example, "Li₂S-P₂S₅" represents a material obtained by using a raw material composition containing Li₂S and P₂S₅, and "X" in each of the above materials is a halogen atom), and oxide-based solid electrolytes such as Li_{6.24}La₃Zr₂Al_{0.25}O₁₂, Li₃PO₄, and Li₃₊ₓPO₄₋ₓNₓ.

### EXAMPLES

Hereinafter, embodiments of the present invention will be specifically described with reference to Examples and Comparative Examples, but the present invention is not limited thereto.

### 1. Measurement of physical properties of heat seal layer

In the following Examples and Comparative Examples, the melting point, the oxygen transmission rate, and the water vapor transmission rate of the heat seal layer were measured by the following methods.

### (Oxygen transmission rate per 1 m²)

The oxygen transmission rate (cc/m²/d/atm) per 1 m² (area of one side) of each resin film used for the heat seal layer was measured by a method in accordance with JIS K7126-2:2006 using an oxygen transmission rate measurement apparatus (OX-TRAN 2/22, available from MOCON, Inc.) by an equal pressure method under the conditions of a temperature of 30°C, a relative humidity of 80%, a measurement time of 24 h, and 1 atm. This was defined as the oxygen transmission rate of a film thickness of 20 µm according to the following formula.
[Math. 1] Oxygen transmission rate at a film thickness of 20 µm = Oxygen transmission rate per 1 m2 of film × film thickness (µm)/20

### (Water vapor transmission rate per 1 m²)

The water vapor transmission rate (g/m²/d/atm) per 1 m² (area of one side) of each resin film used for the seal layer was measured by the following method according to a method in accordance with JIS K7129-2:2019 using a water vapor transmission rate measurement apparatus (PERMATRAN-W3/33, available from MOCON, Inc.) by an equal pressure method under the conditions of a temperature of 40°C, a relative humidity of 90%, a measurement time of 24 h, and 1 atm. This was defined as the water vapor transmission rate of a film thickness of 20 µm according to the following formula.
[Math. 2] Water vapor transmission rate at a film thickness of 20 µm = water vapor transmission rate per 1 m2 of film × film thickness (µm)/20

### (Melting temperature (melting point) of resin)

The melting temperature (melting point) of each resin can be measured by a differential scanning calorimeter. Specifically, DSC 3+ available from METTLER TOLEDO was used as the analyzer. 10 mg of the vinylidene fluoride-based polymer was weighed in an aluminum pan, and placed in the analyzer, and the inside of the analyzer is replaced with pure nitrogen gas. Thereafter, the pure nitrogen gas was caused to flow at a flow rate of 100 ml/min, the temperature was raised from room temperature to 230°C at 10°C/min (first temperature rise), held at 230°C for 10 minutes, then lowered from 230°C to 30°C at 10°C/min (first cooling), and further raised from 30°C to 230°C at 10°C/min (second temperature rise), and the melting peak was measured. Then, the temperature of the melting peak having a maximum area observed at the second temperature rise was defined as the melting point of the vinylidene fluoride-based polymer.

The melting points of resins other than polyvinylidene fluoride such as PP, PTFE, and ETFE were also measured with a differential scanning calorimeter (DSC 3+, available from METTLER TOLEDO). Specifically, 10 mg of each of these resins were weighed in an aluminum pan, and placed in the analyzer, the inside of the analyzer was replaced with pure nitrogen gas, pure nitrogen gas was then flowed at a flow rate of 100 ml/min, the temperature was raised from room temperature at 10°C/min, and the melting peak was measured. The temperature of the melting peak having the maximum area observed at the temperature rise was defined as the melting point.

### 2. Preparation and evaluation of outer package material

### Example 1

An aluminum (Al) foil (A1N30H-H18, available from UACJ Foil Corporation) having a thickness of 50 µm was immersed in a 5 wt% aqueous solution of an alkali immersion degreasing agent (SK-144, available from JCU Corporation) at 70°C for 1 minute. Then, after the aluminum foil was washed and dried with ion-exchanged water, a 1 wt% amino group-containing silane coupling agent (hereinafter, also simply referred to as "coupling agent") aqueous solution was applied to one side, and dried. Next, a polyvinylidene fluoride (PVDF) film (homopolymer type #1000, available from Kureha Corporation) having a thickness of 50 µm and the coupling agent coated surface of the aluminum foil were superimposed and pressed at 200°C and 2 MPa for 5 minutes using a heater plate molding machine (P4054-00, available from NPa SYSTEM CO., LTD.) to obtain a multilayer film of the PVDF film and the aluminum foil. A two-part curable urethane adhesive (polyol compound and aromatic isocyanate compound) was applied to the side of the aluminum foil that the PVDF of the multilayer film was not stacked, a polyethylene terephthalate (PET) film (50 µm) was stacked, and the obtained multilayer body was aged and heated to obtain an outer package body for an all-solid-state secondary battery including a multilayer body of a substrate layer (PET film)/barrier layer (Al foil)/heat seal layer (PVDF film). The outer package body was heat-sealed at 180°C, and a T-type peeling strength was measured.

### Example 2

An outer package body for an all-solid-state secondary battery including a multilayer body of a substrate layer (PET film)/barrier layer (Al foil)/heat seal layer (PVDF film) was obtained by immersing in an alkali immersion degreasing agent in Example 1, washing with ion-exchanged water, applying a two-part curable urethane adhesive (polyol compound and aromatic isocyanate compound) to an aluminum foil, stacking a PVDF film (#1000, available from Kureha Corporation) having a thickness of 50 µm, and bonding a PET film (50 µm) to the side of the aluminum foil that the PVDF of the multilayer film was not stacked in the same manner as in Example 1. The outer package body was heat-sealed at 180°C, and the peeling strength was measured.

### Example 3

An outer package body for an all-solid-state secondary battery including a multilayer body of a substrate layer (PET film)/barrier layer (stainless steel foil)/heat seal layer (PVDF) was obtained in the same manner as in Example 1 except that the thickness of PVDF was set to 100 µm and a stainless foil (HS0132, available from Hikari Co., Ltd.) having a thickness of 100 µm was used instead of the aluminum foil having a thickness of 50 µm. The outer package body was heat-sealed at 180°C, and the peeling strength was measured.

### Example 4

An outer package body for an all-solid-state secondary battery including a multilayer body of a substrate layer (PET film)/barrier layer (Al foil)/heat seal layer (PVDF film) was obtained in the same manner as in Example 1 except that the thickness of the PVDF film was 30 µm. The outer package body was heat-sealed at 180°C, and the peeling strength was measured.

### Example 5

An outer package body for an all-solid-state secondary battery including a multilayer body of a substrate layer (PET film)/barrier layer (Al foil)/heat seal layer (PVDF film) was obtained in the same manner as in Example 1 except that the thickness of the PVDF film was 200 µm. The outer package body was heat-sealed at 180°C, and the peeling strength was measured.

### Example 6

An outer package body for an all-solid-state secondary battery including a multilayer body of a substrate layer (PET film)/barrier layer (Al foil)/heat seal layer (PVDF film) was obtained in the same manner as in Example 1 except that the thickness of the PVDF film was 100 µm. The outer package body was heat-sealed at 180°C, and the peeling strength was measured.

### Example 7

An outer package body for an all-solid-state secondary battery including a multilayer body of substrate layer (PET film)/barrier layer (Al foil)/heat seal layer (PVDF film) was obtained in the same manner as in Example 6 except that the PVDF film was a homopolymer high polymerization degree type (homopolymer #1300, available from Kureha Corporation). The outer package body was heat-sealed at 180°C, and the peeling strength was measured.

### Example 8

An outer package body for an all-solid-state secondary battery including a multilayer body of substrate layer (PET film)/barrier layer (Al foil)/heat seal layer (PVDF film) was obtained in the same manner as in Example 6 except that the PVDF film was a copolymer type (copolymer #2300, available from Kureha Corporation). The outer package body was heat-sealed at 180°C, and the peeling strength was measured.

### Example 9

An aluminum foil having one side coated with a coupling agent was prepared in the same manner as in Example 1. Next, a PET film having a thickness of 90 µm and the coupling agent coated surface of the aluminum foil were superimposed, and pressed at 260°C and 2 MPa for 5 minutes using the heater plate molding machine to obtain a multilayer film of the PET film and the aluminum foil. The same coupling agent as in Example 1 was applied to the side of the aluminum foil that the PET film of the multilayer film was not stacked, a PVDF film (homopolymer type #1000, available from Kureha Corporation) having a thickness of 50 µm was stacked, and the multilayer body was pressed at 180°C and 2 MPa for 5 minutes using the heater plate molding machine to obtain an outer package body for an all-solid-state secondary battery including a multilayer body of substrate layer (PET film)/barrier layer (Al foil)/heat seal layer (PVDF film). The outer package body was heat-sealed at 160°C, and the peeling strength was measured.

### Comparative Example 1

An outer package body for an all-solid-state secondary battery including a multilayer body of a substrate layer (PET film)/barrier layer (Al foil)/heat seal layer (PVDF film) was obtained in the same manner as in Example 1 except that the thickness of the PVDF film was 5 µm. The outer package body was heat-sealed at 180°C, and the peeling strength was measured.

### Comparative Example 2

A commercially available aluminum laminate film (purchased from Hohsen Corp., substrate: nylon thickness 25 µm, barrier layer: aluminum foil thickness 40 µm, heat seal layer: polypropylene-based resin, pouch film, packaging material) for consumer use small batteries was used. The 1 aluminum laminate film was heat-sealed at 140°C, and the peeling strength was measured.

### Comparative Example 3

Although an attempt was made to prepare an outer package body for an all-solid-state secondary battery including a multilayer body of a substrate layer (PET film)/barrier layer (Al foil)/heat seal layer (PTFE film) in the same manner as in Example 1 except that polytetrafluoroethylene (PTFE) (YODOFLON PTFE film, available from Yodogawa Hu-Tech Co., Ltd.) having a thickness of 60 µm was used for the heat seal layer instead of the PVDF film, the PTFE film did not adhere to the barrier layer. Also, heat-sealing of PTFE films was attempted, but the heat-sealing could not be performed at a heat sealing temperature of 180°C.

### Comparative Example 4

An outer package body for an all-solid-state secondary battery including a multilayer body of a substrate layer (PET film)/barrier layer (Al foil)/heat seal layer (ETFE film) was obtained in the same manner as in Example 1 except that ethylene-polytetrafluoroethylene (ETFE) (ETFE film, available from Toray Advanced Film Co., Ltd.) having a thickness of 50 µm was used as the heat seal layer instead of the PVDF film and the press temperature was 260°C. The outer package body could not be heat-sealed at 180°C.

### Comparative Example 5

The outer package body described in Comparative Example 4 was heat-sealed at 260°C, and the peeling strength was measured.

### 3. Evaluation

The T-shape peeling strength of the outer package material prepared in each of Examples and Comparative Examples was measured by the following method. The T-shape peeling strength was measured under the following conditions for the outer package material in which the heat seal layers were heat-sealed to each other at a temperature of from the melting point of the heat seal layer to the melting point + 10°C (specific temperature is described in the description of each of Examples and Comparative Examples) unless otherwise specified. Since all the outer package materials (substrate layer/barrier layer/heat seal layer) were fixed with grips of a universal testing machine and a T-shape peeling test was performed, it was confirmed in the peeling test that peeling occurred at a portion between the heat seal layers that were heat-sealed to each other.

A plurality of sheets of the multilayer body were cut into a strip shape of 100 mm in length × 15 mm in width, and two sheets of the cut out multilayer body were superimposed with the surfaces of the heat seal layer facing each other, placed in a heat seal tester (TP-701-C, available from Tester Sangyo Co., Ltd.), and heated for 3 seconds under a pressure (load) of 0.5 MPa so that the heat seal layer had a predetermined temperature for 3 seconds to prepare a heat-sealed body. At that time, heat sealing was not performed for 25 mm from one end in the longitudinal direction, and the remaining region of 75 mm was heat-sealed. After the heat-sealing, the heat-sealed body was allowed to stand at room temperature and slowly cooled, and the heat-sealed body after 24 hours or longer was cut out into a width of 10 mm to obtain a T-shape peeling test piece.

A T-shape peeling test was performed using a universal testing machine (RTC-1210A, available from A&D Company, Limited) installed in a thermostatic bath maintained at 130°C. The non-heat-sealed end of the T-shape peeling test piece was opened in the opposite direction until the non-heat-sealed end became perpendicular to the heat-sealed portion, and each was stopped by a gripper of a tester. At that time, the non-heat-sealed portion was made straight between the grippers. It was confirmed that the temperature in the thermostatic bath was 130°C, the gripper of the universal tester was moved in a tensile direction at a speed of 50 mm/min, and stress of the gripper applied to a peeling distance was recorded. The maximum stress (N) at a peeling distance of 5 mm to 50 mm was divided by the width (cm) of the heat-sealed body to obtain a peeling strength (N/cm).

### 4. Results

Table 1 indicates various physical properties, heat sealing temperature, and T-shape peeling strength of materials used for producing the heat seal layer and the barrier layer in each of Examples and Comparative Examples.

**[Table 1]**

| | Heat seal layer | | | | | | Barrier layer | | Heat seal product | |
|---|---|---|---|---|---|---|---|---|---|---|
| | Resin type | Type | Thickness/pm | Melting point/°C | O₂TR transmittance (per 20 µm) | WVTR transmittance (per 20 µm) | Metal foil | | Heat sealing temperature/°C | T-shape peeling strength N/cm |
| | | | | | 30°C 80% RH/cc/m²·day·atm i | 40°C 90% RH/g/m²·day·atm i | Metal species | Thickness/µm | | |
| Example 1 | PVDF | #1000 | 50 | 172 | 283 | 40 | AI | 50 | 180 | 43 |
| Example 2 | PVDF | #1000 | 50 | 172 | 283 | 40 | AI | 50 | 180 | 35 |
| Example 3 | PVDF | #1000 | 100 | 172 | 283 | 40 | SUS | 100 | 180 | 31 |
| Example 4 | PVDF | #1000 | 30 | 172 | 283 | 40 | AI | 50 | 180 | 44 |
| Example 5 | PVDF | #1000 | 200 | 172 | 283 | 40 | AI | 50 | 180 | 50 |
| Example 6 | PVDF | #1000 | 100 | 172 | 283 | 40 | AI | 50 | 180 | 47 |
| Example 7 | PVDF | #1300 | 100 | 173 | 220 | 50 | AI | 50 | 180 | 44 |
| Example 8 | PVDF | #2300 | 100 | 152 | 449 | 52 | AI | 50 | 160 | 22 |
| Example 9 | PVDF | #1000 | 50 | 172 | 283 | 40 | AI | 50 | 180 | 45 |
| Comparative Example 1 | PVDF | #1000 | 5 | 172 | 283 | 40 | AI | 50 | 180 | 16 |
| Comparative Example 2 | PP | - | 40 | 139 | 14000 | 228 | AI | 40 | 140 | 13 |
| Comparative Example 3 | PTFE | - | 100 | 331 | 8323 | 2 | AI | 50 | 180 | Did not adhere |
| Comparative Example 4 | ETFE | - | 50 | 256 | 6080 | 21 | AI | 50 | 180 | Did not adhere |
| Comparative Example 5 | ETFE | - | 50 | 256 | 6080 | 21 | AI | 50 | 260 | 1 |

As is apparent from Table 1, it was found that when the heat seal layer containing polyvinylidene fluoride and having a thickness of 10 µm or more and 500 µm or less was used for the outer package material, it was not necessary to increase the heat sealing temperature so much, and on the other hand, the adhesive strength at about 130°C after heat sealing was high.

The present application claims priority based on Japanese Patent Application No. 2022-022017 filed on February 16, 2022, and the contents described in the specification and claims of this application are incorporated herein by reference.

### INDUSTRIAL APPLICABILITY

The outer package material of the present invention does not need to have a very high heat sealing temperature, and on the other hand, has high adhesive strength at about 130°C after heat sealing. The outer package material is very useful as an outer package material of an all-solid-state secondary battery, particularly an all-solid-state secondary battery assumed to be used at a high temperature.

## Claims

1. An outer package material for all-solid-state secondary batteries, comprising:
a substrate layer;
a barrier layer comprising, as a material, a metal or a compound containing a metal; and
a heat seal layer comprising polyvinylidene fluoride, the heat seal layer having a thickness of 10 µm or more and 500 µm or less,
wherein the substrate layer, the barrier layer, and the heat seal layer are stacked in this order.

2. The outer package material for all-solid-state secondary batteries according to claim 1, wherein the polyvinylidene fluoride has a melting point of 145°C or higher and 190°C or lower.

3. The outer package material for all-solid-state secondary batteries according to claim 1 or 2, wherein, after the heat seal layers of two of the outer package materials for all-solid-state secondary batteries are heat-sealed to each other, a T-shaped peeling strength between the two heat seal layers at 130°C is 18 N/cm or more.

4. The outer package material for all-solid-state secondary batteries according to claim 1 or 2, wherein the barrier layer and the heat seal layer are bonded by a silane coupling agent having an amino group.

5. An all-solid-state secondary battery, comprising a battery element and the outer package material for all-solid-state secondary batteries according to claim 1 or 2 configured to accommodate the battery element, the battery element comprising a positive electrode, a negative electrode, and a solid electrolyte layer disposed between the positive electrode and the negative electrode.
